# EUROPEAN PATENT SPECIFICATION

(11) **EP 0 824 555 B1**
(45) Date of publication and mention of the grant of the patent: **21.04.1999**
(21) Application number: 96914499.7
(22) Date of filing: 06.05.1996
(51) Int. Cl.: C08F 230/08, C08F 210/02, C08F 255/02

(54) **ETHYLENE POLYMER CONTAINING SILICON AND METHOD FOR THE PREPARATION THEREOF**
ETHYLEN-POLYMER ENTHALTEND SILICIUM UND VERFAHREN ZU DESSEN HERSTELLUNG
POLYMERE D'ETHYLENE CONTENANT DU SILICIUM ET PROCEDE DE PREPARATION DUDIT POLYMERE

(30) Priority: 12.05.1995 SE 9501749
(43) Date of publication of application: 25.02.1998
(73) Proprietor: BOREALIS A/S, 2800 Lyngby (DK)
(72) Inventor: GUSTAFSSON, Bill, S-444 41 Stenungsund (SE); LAURELL, Jussi, FIN-06400 Porvoo (FI)
(74) Representative: Wiklund, Erik
(86) International application number: SE9600589
(87) International publication number: WO9635732

(56) References cited:
- EP-A- 0 352 339
- EP-A- 0 352 793
- EP-A- 0 357 037

## Description

The present invention relates to an ethylene polymer containing silicon and a method for the preparation thereof. More specifically, the invention relates to an ethylene polymer prepared by graft-copolymerisation or radical polymerisation through a high-pressure process, containing siloxane and having an increased degree of unsaturation, said ethylene polymer being usable as e.g. cable material.

Apart from this ethylene polymer containing silicon being easier to cross-link owing to its increased degree of unsaturation, it has an increased dielectric strength because of its decreased tendency towards so-called water treeing (enhanced Water Tree Resistance; WTR).

LDPE (i.e. polyethylene prepared by radical polymerisation at a high pressure), cross-linked by adding peroxide, for instance dicumyl peroxide, in connection with the extrusion of the cable, is today the predominant cable insulating material. LLDPE, owing to its higher melting point and the resultant requirement for higher temperature in connection with extrusion, has not come into favour, since the necessarily higher temperature results in a strongly increased sensitivity to scorch, i.e. the formation of discoloured gel particles in the material, owing to a premature cross-linking reaction that is too intense.

One property of LDPE that could be improved is its normally low degree of unsaturation in the order of 0.1 double bonds/1000 C atoms, which makes the radical-initiated cross-linking a speed-limiting procedure in extrusion. A greater amount of double bonds would facilitate the reactivity to the free radicals formed in the decomposition of the peroxide.

A further limitation of conventional LDPE is its tendency to be exposed, in the presence of water and under the action of strong electric fields, to the formation of dendritically branched defects, so-called water trees, which can lead to breakdown and possible electrical failure. This tendency is strongly affected by the presence of inhomogeneities, microcavities and impurities in the material. Water treeing has been studied carefully, especially since the 1970's, when polymer materials and, in particular, cross-linked polyethylene became the predominant insulating material for electric cables for medium and high voltages. In the past years, these studies have entailed improvements in the construction of the cables, the manufacturing procedures and the quality and cleanliness of the used materials. These improvements have resulted in an increased service life of the manufactured cables. Yet there is a pronounced need of still more improved materials in respect of resistance and water treeing.

The published international patent application WO 91/07761 discloses a cable sheathing composition, which is prepared by radical-initiated high-pressure polymerisation and which contains ethylene, 30-60% by weight of monofunctional, ethylenically unsaturated ester, preferably vinyl acetate or methylacrylate, and 1-15% by weight of a multifunctional, ethylenically unsaturated termonomer, with at least two ethylenically unsaturated groups. The polymer has a melt flow rate (MFR) of 0.1-10 and, besides, the composition contains a filler, a cross-linking agent and a stabiliser. The multifunctional termonomer is a double-unsaturated molecule which also includes -O- and/or C=O functions. Preferably, the termonomer is obtained by esterification of a glycol with acrylic acid or is a homologue thereof. Most preferred, the termonomer is ethylene glycol dimethacrylate (EDMA). In contrast to, for instance, aliphatic diene hydrocarbons, this polyunsaturated acrylate ester is highly reactive, which entails that all the unsaturation of the termonomer reacts in connection with the polymerisation, i.e. the formation of the polymer. Therefore, no increased degree of unsaturation of the resulting polymer, which would permit rapid cross-linking thereof, is obtained. Instead, the purpose of the termonomer is, by binding together different molecular chains, to participate in a reduction of the melt flow rate of the product. Moreover, it is worth noticing that the polymers obtained according to this patent application are intended to be used as cable sheathing material, not as cable insulating material. They are unfitting for the last-mentioned purpose since, owing to their high content of polar groups, they give a high degree of dielectric loss and also unsatisfactory strippability compared with the materials that are normally used in the semiconductor layer in a power cable.

It is also known from the published international patent application W093/0822 to prepare, by copolymerisation of ethylene with an aliphatic diene, preferably 1,9-decadiene, polymers having increased double bond contents, suited to be used in contexts in which subsequent cross-linking of the polyethylene is to be effected, such as for the insulating layer in a power cable. This type of polymer, however, does not yield the enhancement of the WTR property, which is also an object of the present invention.

Moreover, it is known that, by adding propylene as chain-transfer agent, it is possible to obtain increased double bond contents also in polyethylene prepared by radical polymerisation through a high-pressure process. This is described in, for instance, Encyclopedia of Polymer Science and Technology, Rev. Ed., Volume 6 (1986), p. 394, last paragraph, including p. 395, 1st paragraph. However, the level of double bond content that has been achieved in this manner in LDPE of about 0.3-0.4 double bonds/1000 carbon atoms is in many contexts lower than optimally.

Finally, it is also disclosed in EP 352 793 that polysiloxane can be added to a cable insulating material, for the purpose of improving its WTR properties. On the one hand, in that case one must, however, owing to the insufficient compatibility of the polysiloxane with the polyethylene, anticipate a risk of the polysiloxane exudating, especially if its average molecular weight is not high (if instead the average molecular weight is high, the possibility of efficient admixing will be affected negatively), and, on the other hand, the property of allowing quicker cross-linking is not achieved either.

In view of what has been said above, it is an object of the present invention to provide an unsaturated ethylene polymer.

A further object of the present invention is to provide an ethylene polymer having enhanced water tree resistance (WTR).

According to the invention, these and other objects are achieved by an ethylene polymer including a special α,ω-divinylsiloxane.

Thus, we have now surprisingly found that certain α,ω-unsaturated divinylsiloxane compounds can be used as comonomers in the preparation of an unsaturated ethylene copolymer by radical-initiated polymerisation.

It has been found that out of the unsaturation of the comonomer, only one double bond in the majority of the comonomer molecules reacts with the ethylene by copolymerisation therewith, whereas the other double bond remains intact.

According to the invention, the radical-initiated polymerisation can be both copolymerisation and graft copolymerisation.

Consequently, according to the invention an ethylene polymer containing silicon is provided, characterised in that it comprises a polymer, obtained by radical polymerisation, of ethylene and at least one monomer copolymerisable with ethylene and including a polyunsaturated comonomer, which is an α,ω-divinylsiloxane having the formula I 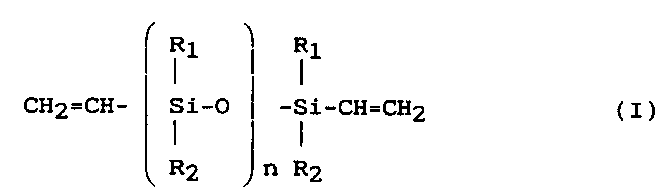 wherein R₁ and R₂, which can be alike or different, are selected among alkyl groups having 1-4 carbon atoms and alkoxy groups having 1-4 carbon atoms, and n = 1-200.

The invention also provides a method for preparing an ethylene polymer containing silicon, said method being characterised in that ethylene and at least one monomer copolymerisable with ethylene and including a polyunsaturated comonomer, which is an α,ω-divinylsiloxane of formula I 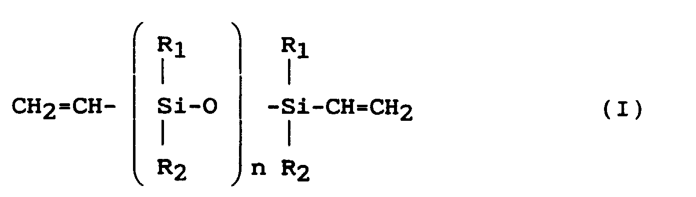 wherein R₁ and R₂, which can be alike or different, are selected among alkyl groups having 1-4 carbon atoms and alkoxy groups having 1-4 carbon atoms, and n = 1-200, are copolymerised at a pressure of about 100-300 MPa and a temperature of about 80-300°C under the influence of a radical initiator.

The invention also provides a method for preparing an ethylene polymer containing silicon, said method being characterised in that an ethylene polymer is prepared by polymerisation of ethylene, optionally together with at least one more vinylically unsaturated monomer, and that the resulting ethylene polymer is graft-copolymerised with an α,ω-divinylsiloxane of formula I 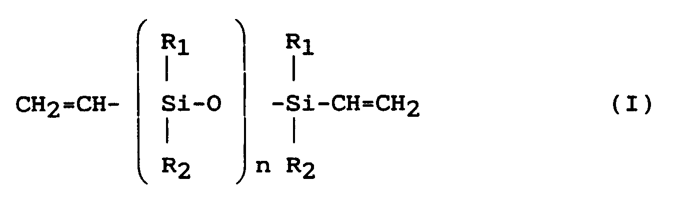 wherein R₁ and R₂, which can be alike or different, are selected among alkyl groups having 1-4 carbon atoms and alkoxy groups having 1-4 carbon atoms, and n = 1-200.

The invention is also drawn to the use of the unsaturated ethylene polymer in compositions intended for the preparation of cross-linked structures, for instance, insulating-layer material for electric cables.

Further distinctive features of the invention will be apparent from following description and the claims.

For an optimum result in the invention, the distance between the double bonds of the polyunsaturated comonomer of formula I should not be too great. This is expressed by the value of n in formula I. Generally, n = 1-200 according to the invention, and in view of commercial accessibility, preferably n = 1-100. Most preferred, n = 1-50 owing to the higher addition of double bonds in proportion to the weight content of siloxane comonomer included in the copolymer.

As mentioned above, according to the invention R₁ and R₂, which can be alike or different, are alkyl groups having 1-4 carbon atoms or alkoxy groups having 1-4 carbon atoms. Preferably, R₁ and R₂ are alike, and most preferred, R₁ = R₂ = methyl, methoxy or ethoxy.

The content of the polyunsaturated comonomer of formula I is such that the copolymer contains 0.2-10% by weight, preferably 0.2-5% by weight, of this comonomer.

In addition to ethylene and at least one polyunsaturated comonomer of formula I above, the inventive ethylene polymer may contain up to 40% by weight of some other monomer which is copolymerisable with ethylene. Such monomers are well known to those skilled in the art and need not be extensively enumerated. However, the following examples can be mentioned: vinylically unsaturated monomers, such as C₃-C₈ α-olefins, for instance, propene, butene; vinylically unsaturated monomers containing functional groups, such as hydroxyl groups, alkoxy groups, carbonyl groups, carboxyl groups and ester groups. Such monomers may be e.g. (meth)acrylic acid and alkyl esters thereof, such as methyl-, ethyl- and butyl(meth)acrylate; vinylically unsaturated, hydrolysable silane monomers, such as vinyl trimethoxy silane; vinyl acetal etc.

Propene and higher α-olefins can be regarded as a special case, since they also act as chain-transfer agents and produce terminal unsaturation in the polymer (cf. what has been said above about creating increased double-bond contents by adding propene as comonomer with reference to Encyclopedia of Polymer Sciences and Technology, Rev. Ed., Volume 6 (1986), pp 394-395). By using propene as comonomer in addition to the above defined, polyunsaturated comonomer, it is thus possible to provide, in a relatively simple and inexpensive fashion, a still more increased degree of unsaturation of the prepared copolymer.

As stated above, the unsaturated ethylene polymer according to the invention is obtained by graft copolymerisation or by free-radical-initiated high-pressure polymerisation.

Graft copolymerisation is a well-known polymerisation procedure in the art and thus need not be described in detail here. In general terms, graft copolymerisation is accomplished in such a manner that a vinylically unsaturated monomer is copolymerised with an ethylene polymer, such as an ethylene homopolymer or an ethylene copolymer, under the influence of a free radical initiator, such as a peroxide, for instance dicumyl peroxide (DCP). The temperature in the graft copolymerisation should be sufficient for decomposition of the free radical initiator with formation of free radicals, which, by using dicumyl peroxide as initiator, means about 120-170°C, and the polymerisation can be practically effected, for instance, by mixing the components in an extruder.

Free-radical-initiated high-pressure polymerisation, which is also well known in the art, is generally done in such a manner that in a reactor, such as an autoclave or tubular reactor, at a high pressure of about 100-300 MPa and an increased temperature of about 80-300°C, the monomers are reacted under the influence of a radical initiator, such as a peroxide, hydroperoxide, oxygen or azo compound. When the reaction is finished, the temperature and the pressure are lowered and the resulting, unsaturated polymer is extracted. For further details regarding the preparation of ethylene polymers by high-pressure polymerisation during free-radical-initiation, reference can be made to Encyclopedia Polymer Science and Engineering, Volume 6 (1986), pp 383-410, especially pp 404-407.

As mentioned by way of introduction, the polymers according to the present invention are intended to be used when a polymer with reactive sites in the form of ethylenical unsaturation is desired. The ethylenical unsaturation can be used to incorporate functional groups, such as hydroxyl, carboxyl and the like, into the polymer, by reaction with compounds containing such functional groups. The ethylenical unsaturation can also, and perhaps above all, be used to cross-link the polymer. The cross-linking of polyethylene is desirable in many situations, such as in extrusion (for instance, of pipes, cable insulation or cable sheaths), blow moulding, rotational moulding etc.

As mentioned above, the polymers according to the present invention have enhanced water tree resistance and are therefore usable as, for instance, insulating material in electrical contexts. It has been found that the WTR properties of the polymers according to the present invention increase with an increased siloxane content in the polymer, such as with an increased size of the siloxane portion and with an increased number of siloxane portions in the polymer. By the siloxane portion being polymerised into the polymer, it is permanently secured in the polymer molecule and cannot migrate or exudate, as is the case with conventional WTR additives. This constitutes a special advantage of the polymers according to the invention.

Based on the above-mentioned properties of the inventive polymers, it is consequently desirable to use them in the field of cable manufacture, which will be accounted for in some detail here. In the extrusion of, for instance, a power cable, the metallic conductor usually is first coated with a semiconductor layer, then with an insulating layer, then with one more semiconductor layer optionally followed by water barrier layers and finally with a sheath layer.

At least the insulating layer and the outer semiconductor layer normally consist of cross-linked ethylene homopolymers and/or ethylene copolymers. Cross-linking significantly contributes to improve the temperature resistance of the cable, which will be subjected to considerable temperature stress when in operation. Cross-linking is brought about by adding a free-radical-forming agent, mostly of peroxide type, to the polymer materials in the above-mentioned layers prior to extrusion. In the actual extrusion, this radical-forming agent should preferably remain stable but decompose in a subsequent vulcanising step, at an increased temperature, thereby forming free radicals which should initiate cross-linking. Premature cross-linking during extrusion will appear as so-called scorch, i.e. as inhomogeneities and asperities, possibly also as discoloured material, in the different layers in the finished cable. In combination, the polymer material and the radical-forming agent are therefore not allowed to be too reactive at the temperatures prevailing in the extruder (about 125-140°C).

After the extruder, the cable is passed through a long multi-zone vulcanising tube in which cross-linking should take place as rapidly and completely as possible, initiated by the heat emitted in one or more heated zones of the vulcanising tube. A nitrogen-gas pressure is applied in the tube, and contributes to prevent oxidation processes by keeping away the oxygen of the air and to reduce the formation of microcavities, so-called voids, in the polymer layers by reducing the expansion of the gases resulting from the decomposing radical-forming agent. It is desirable that cross-linking be rapid, but require as little free-radical forming agent as possible since this reduces the risk of scorch in the extruder, results in minimum formation of microcavities, as mentioned above, and is economically advantageous, peroxide being an expensive additive. The polymer material that is to be cross-linked should therefore, in the vulcanising step, be as reactive as possible, a property to which the present invention contributes to a substantial degree.

As appears from the foregoing, the unsaturated ethylene polymer according to the invention can be used as material for insulating layers, semiconductor layers and sheath layers of electric cables.

To further facilitate the understanding of the invention, some illustrative, but non-restrictive Examples are given below.

### Example 1

In this test, use was made of a continuous autoclave reactor having a recycling system. The reactor volume was about 5 1. Ethylene was supplied to the reactor through two inlet ducts; 50% of the ethylene was pumped to the reactor via the motor housing (for cooling), and the remainder was supplied directly. The ethylene was pumped by means of a double-acting hydraulic pump. The total flow rate was 25-30 l/h.

An initiator was added through two injection systems to an upper and a lower injection nozzle. The diene, which in this test was tetramethyl divinyldisiloxane (R₁=R₂=CH₃ and n=1 in formula I), was also supplied through the upper nozzle. The addition was begun when the reaction conditions were stable. The amount of tetramethyl divinylsiloxane was then increased continuously up to 9% by weight, as based on the polymer, for a total production time of 20 h. This means that copolymers having a varying content of tetramethyl divinylsiloxane of 0-9% by weight were prepared.

In the start-up, use was made of heat exchangers on the ethylene ducts for heating the reaction mixture. These were turned off as soon as the reaction had started.

The polyethylene/ethylene mixture was removed from the reactor through a product valve. Ethylene was removed in gaseous form from the mixture in a high-pressure and a low-pressure separator and was recycled to the reactor. Polyethylene was removed from the low-pressure separator and pressed through a nozzle out into a water bath, where it was recovered. Residual products were removed by opening a drain valve after the return gas cooler. Samples were taken intermittently and analysed for the content of double bonds. The double bond content was determined for two samples containing 1.8% by weight and 6.5% by weight of siloxane, respectively. The double bond content of the polymer was analysed by means of infrared spectrophotometry at 1595 cm⁻¹ and is expressed as the number of double bonds per 1000 carbon atoms. It was found that the sample having a siloxane content of 1.8% by weight had 0.13 double bonds per 1000 carbon atoms, while the sample having a siloxane content of 6.5% had 0.37 double bonds per 1000 carbon atoms. Moreover, the melt flow rate was determined for the two polymers and was found to be 23 g/10 min for the polymer having 1.8% by weight of siloxane and 20 g/10 min for the polymer having 6.5% by weight of siloxane.

### Example 2

To measure the increased cross-linkability or the cross-linking of the two polymer samples that were prepared in Example 1 and contained 1.8% by weight and 6.5% by weight of siloxane, compared with a corresponding polymer sample that did not contain any siloxane, the following test was carried out.

1.5% by weight of dicumyl peroxide was added as cross-linking catalyst to each of the polymer samples. Subsequently, pellets were prepared from the different polymer samples, and from these pellets, plates were prepared by preheating at 120°C for 2 min and pressing at 9.3 MPa for 2 min. The obtained plates were then tested in a Göttfert elastograph, which measures the change (increase) in the shear modulus of cross-linkable polyethylene when the dicumyl peroxide is decomposed and crosslinks the polymer chains at 180°C after 10 min. The testing method corresponds to ISO 6502. The results are shown in the Table below.

| Siloxane content in the ethylene polymer (% by weight) | Shear modulus (Nm) |
|---|---|
| 0 (comparative) | 0.45 |
| 1.8 | 0.57 |
| 6.5 | 0.85 |

It is obvious from the Table that an increased degree of cross-linking is obtained with an increased siloxane content in the polymer.

### Example 3

The method in Example 1 was repeated, except that as α,ω-divinylsiloxane, use was made of a divinyl poly(dimethylsiloxane) of formula I, wherein n = 12. In the test, the siloxane content of the polymer was increased progressively up to a maximum content of 8% by weight. Although the maximum content of siloxane in the polymer thus was almost as high as in Example 1, the magnitude of the used divinylsiloxane compound made the resultant increase of the double bond content restricted. However, no tests for determining the double bond content or cross-linking of the obtained polymer were made.

### Example 4

The test in Example 3 was repeated, except that as α,ω-divinylsiloxane compound, use was made of a compound of formula I, wherein R₁=R₂=CH₃ and n = 20. In the test, the divinylsiloxane was incorporated in the polymer up to a maximum content of 3.5% by weight.

### Example 5

The method in Example 3 was repeated, except that as α,ω-divinylsiloxane compound, use was made of a compound of formula I, wherein R₁=R₂=CH₃ and n = 100. In the test, the divinylsiloxane compound was incorporated into the polymer up to a maximum content of 2.5% by weight.

### Example 6

The WTR properties of ethylene polymers according to the invention were tested by Ashcraft testing. To that end, compression-moulded test pieces were prepared from various polymers, viz. a standard low-density polyethylene (LDPE) having an MFR of 2 g/10 min, which was used as reference, and a siloxane-containing polymer which was prepared according to Example 4 and contained 2% by weight of siloxane, and a siloxane-containing polymer which was prepared according to Example 5 and contained 2.5% by weight of siloxane. All the test pieces were cross-linked by adding 2% by weight of dicumyl peroxide.

Ashcraft testing, which is a testing method for determining the WTR properties of polymers, has been described by Ashcraft, A.C., "Water Treeing in Polymeric Dielectrics", World Electrotechnical Congress in Moscow, U.S.S.R. 22 June 1977. By Ashcraft testing, well characterised defects are provided, viz. sharp, water-filled indentations, by means of a needle in compression-moulded cups. A voltage of 5 kV/6 kHz is applied across the water, whereas the bottom of the cup is connected to earth. The temperature is constantly kept at 65°C. The average length of the water trees after 72 h ageing is considered as a measure of the growth rate of the water trees in the specific insulating material.

The results from the Ashcraft testing are compiled in the Table below.

| Siloxane content and type | Average length (µm) | Average length (%) |
|---|---|---|
| 0% comparative | 533 | 100 |
| 2%, n = 20 | 342 | 64 |
| 2.5%, n = 100 | 226 | 42 |

The test results clearly show the enhanced WTR properties of the siloxane-containing polymers according to the invention, and it is also shown that the WTR properties increase with an increased siloxane content in the polymer.

### Example 7

In this Example, a graft polymer was prepared from polyethylene, as well as a divinylsiloxane compound of formula I, wherein R₁=R₂=CH₃ and n = 20. In the test, an LDPE having an MFR=2 g/10 min was mixed in an extruder having a capacity of 1.8 kg/h. To the extruder were also supplied 1% by weight of the above-mentioned siloxane compound and 0.1% by weight of dicumyl peroxide. The temperature in the extruder was 110°C adjacent to the feed hopper, about 150°C in the subsequent zone, and about 175°C in the final zone, at the discharge end. After mixing the components in the extruder, a uniform polymer material strand was obtained with the siloxane compound graft-copolymerised with the LDPE resin. The uniform discharge of the polymer strand from the extruder proved that the material was not cross-linked. Samples of the extruded material were extracted with toluene for 4 h, and it was established that the siloxane compound was not dissolved, but was fixedly connected with the ethylene polymer by polymerisation.

## Claims

1. An ethylene polymer containing silicon,
**characterised** in that it comprises a polymer, obtained by radical polymerisation, of ethylene and at least one monomer copolymerisable with ethylene and including a polyunsaturated comonomer, which is an α,ω--divinylsiloxane having the formula I 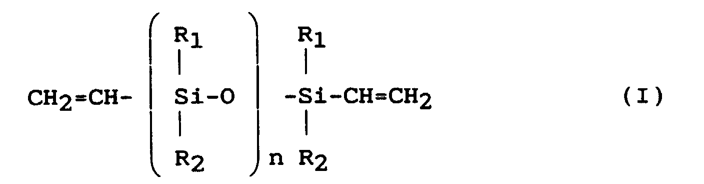 wherein R₁ and R₂, which can be alike or different, are selected among alkyl groups having 1-4 carbon atoms and alkoxy groups having 1-4 carbon atoms, and n = 1-200.

2. The ethylene polymer as claimed in claim 1,
**characterised** in that R₁ and R₂ in formula I are CH₃ and n = 1-50.

3. The ethylene polymer as claimed in claim 1 or 2,
**characterised** in that it is a copolymer of ethylene and at least one monomer which is copolymerisable with ethylene and which includes the compound of formula I.

4. The ethylene polymer as claimed in claim 3,
**characterised** in that it is a copolymer of ethylene and at least two monomers which are copolymerisable with ethylene and which, in addition to the compound of formula I, includes at least one more vinylically unsaturated monomer.

5. The ethylene polymer as claimed in claim 1 or 2,
**characterised** in that it is a graft copolymer of an ethylene polymer and the compound of formula I.

6. A method for preparing an ethylene polymer containing silicon, **characterised** in that ethylene and at least one monomer copolymerisable with ethylene and including a polyunsaturated comonomer, which is an α,ω-divinylsiloxane of formula I 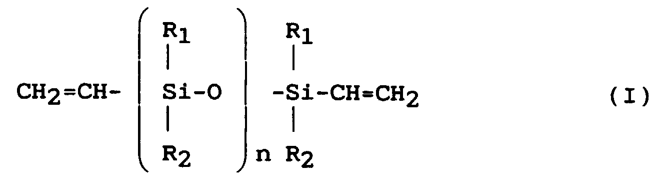 wherein R₁ and R₂, which can be alike or different, are selected among alkyl groups having 1-4 carbon atoms and alkoxy groups having 1-4 carbon atoms, and n = 1-200, are copolymerised at a pressure of about 100-300 MPa and a temperature of about 80-300°C under the influence of a radical initiator.

7. The method as claimed in claim 6, **characterised** in that R₁ and R₂ in formula I are CH₃ and n = 1-50.

8. The method as claimed in claim 6 or 7, **characterised** in that ethylene is copolymerised with a comonomer of formula I and a further vinylically unsaturated monomer.

9. A method for preparing an ethylene polymer containing silicon, c h a r a c t e r i s e d in that an ethylene polymer is prepared by polymerisation of ethylene, optionally together with at least one more vinylically unsaturated monomer, and that the resulting ethylene polymer is graft-copolymerised with an α,ω-divinylsiloxane of formula I 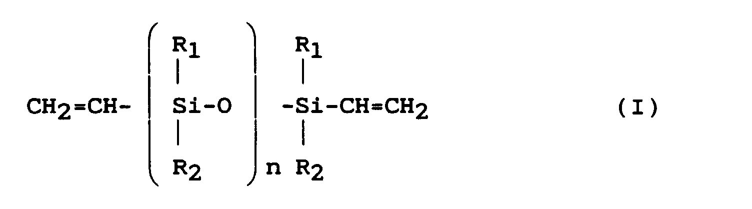 wherein R₁ and R₂, which can be alike or different, are selected among alkyl groups having 1-4 carbon atoms and alkoxy groups having 1-4 carbon atoms, and n = 1-200.

10. Use of the ethylene polymer according to any one of claims 1-5 in compositions for the preparation of cross-linked structures.

11. Use of the ethylene polymer according to any one of claims 1-5 in compositions for insulating-layer material, semiconductor-layer material or sheath material for electric cables.

## Patentansprüche

1. Ethylenpolymer enthaltend Silicium,. dadurch gekennzeichnet, daß es ein Polymer enthält, welches erhalten wurde durch Radikalpolymerisierung von Ethylen und wenigstens einem mit Ethylen copolymerisierbaren Monomer, das ein mehrfach ungesättigtes Comonomer enthält, welches ein α, ω-Divinylsiloxan der Formel I ist 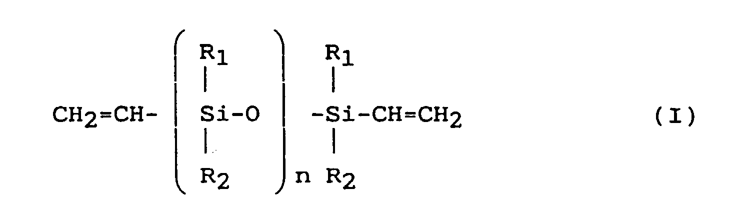 wobei R₁ und R₂, die gleich oder auch verschieden sein können, ausgewählt sind aus Alkylgruppen mit 1 - 4 Kohlenstoffatomen und Alkoxygruppen mit 1 - 4 Kohlenstoffatomen und n = 1 - 200.

2. Ethylenpolymer nach Anspruch 1, dadurch gekennzeichnet, daß R₁ und R₂ in Formel I CH₃ sind und n = 1 - 50.

3. Ethylenpolymer nach Anspruch 1 oder 2, dadurch gekennzeichnet, daß es ein Copolymer von Ethylen und wenigstens einem mit Ethylen copolymerisierbaren Monomer ist, das die Verbindung gemäß Formel I einschließt.

4. Ethylenpolymer nach Anspruch 3, dadurch gekennzeichnet, daß es ein Copolymer von Ethylen und wenigstens zwei mit Ethylen copolymerisierbaren Monomeren ist, welche zusätzlich zur Verbindung der Formel I wenigstens ein weiteres vinylisch ungesättigtes Monomer einschließt.

5. Ethylenpolymer nach Anspruch 1 oder 2, dadurch gekennzeichnet, daß es ein Pfropfcopolymer eines Ethylenpolymers und der Verbindung der Formel I ist.

6. Verfahren zur Herstellung eines Ethylenpolymers enthaltend Silicium, dadurch gekennzeichnet, daß Ethylen und wenigstens ein mit Ethylen copolymerisierbares Monomer, das ein mehrfach ungesättigtes Comonomer enthält, welches ein α, ω-Divinylsiloxan der Formel I ist 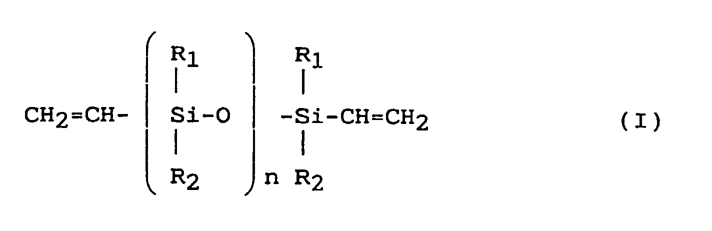 wobei R₁ und R₂, die gleich oder verschieden sein können, ausgewählt sind aus Alkylgruppen mit 1 - 4 Kohlenstoffatomen und Alkoxygruppen mit 1 - 4 Kohlenstoffatomen und n = 1 - 200, bei einem Druck von etwa 100 - 300 Mpa und einer Temperatur von etwa 80 - 300°C unter dem Einfluß eines Radikalinitiators copolymerisiert werden.

7. Verfahren nach Anspruch 6, dadurch gekennzeichnet, daß R₁ und R₂ in Formel I CH₃, sind und n = 1 - 50.

8. Verfahren nach Anspruch 6 oder 7, dadurch gekennzeichnet, daß Ethylen mit einem Comonomer der Formel I und einem weiteren vinylisch ungesättigten Monomer copolymerisiert wird.

9. Verfahren zur Herstellung eines Ethylenpolymers enthaltend Silicium, dadurch gekennzeichnet, daß ein Ethylenpolymer durch Polymerisierung von Ethylen wahlweise zusammen mit wenigstens einem weiteren vinylisch ungesättigten Monomern präpariert wird und daß das erhaltene Ethylenpolymer pfropf-copolymerisiert wird mit einem α,ω-Divinylsiloxan der Formel I 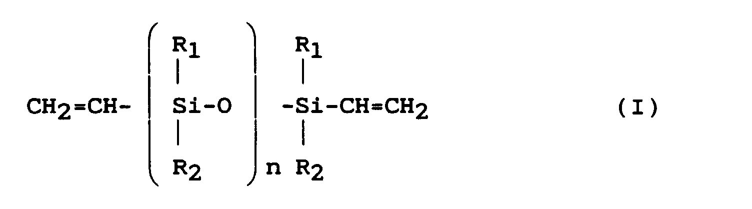 worin R₁ und R₂ gleich oder verschieden sein können und ausgewählt sind aus Alkylgruppen mit 1 - 4 Kohlenstoffatomen und Alkoxygruppen mit 1 - 4 Kohlenstoffatomen und n = 1 - 200.

10. Verwendung des Ethylenpolymers nach einem der Ansprüche 1 bis 5 in Zusammensetzungen zur Herstellung quervernetzter Strukturen.

11. Verwendung des Ethylenpolymers nach einem der Ansprüche 1 bis 5 in Zusammensetzungen für Isolierschichtmaterial, Halbleiterschichtmaterial oder Ummantelungsmaterial für elektrische Kabel.

## Revendications

1. Polymère d'éthylène contenant du silicium, caractérisé en ce qu'il comprend un polymère, obtenu par polymérisation radicalaire, d'éthylène et d'au moins un monomère copolymérisable avec l'éthylène et englobant un comonomère polyinsaturé, qui est un α,ω-divinylsiloxane ayant la formule I 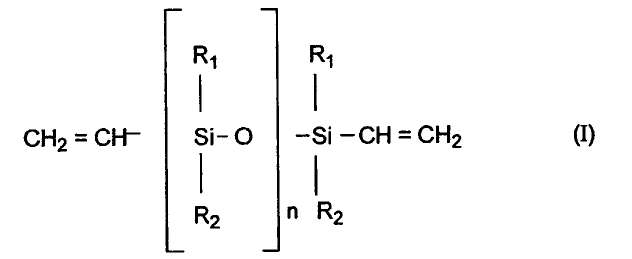 dans laquelle R₁ et R₂, qui peuvent être identiques ou différents, sont choisis parmi des groupes alkyle ayant 1 à 4 atomes de carbone et des groupes alcoxy ayant 1 à 4 atomes de carbone, et n = 1 à 200.

2. Polymère d'éthylène tel que revendiqué dans la revendication 1, caractérisé en ce que R₁ et R₂ dans la formule I sont CH₃ et n = 1 à 50.

3. Polymère d'éthylène tel que revendiqué dans la revendication 1 ou 2, caractérisé en ce que c'est un copolymère d'éthylène et d'au moins un monomère qui est copolymérisable avec l'éthylène et qui englobe le composé de formule I.

4. Polymère d'éthylène tel que revendiqué dans la revendication 3, caractérisé en ce que c'est un copolymère d'éthylène et d'au moins deux monomères qui sont copolymérisables avec l'éthylène et qui, en plus du composé de formule I, comprend au moins un monomère insaturé vinyliquement supplémentaire.

5. Polymère d'éthylène tel que revendiqué dans la revendication 1 ou 2, caractérisé en ce que c'est un copolymère greffé d'un polymère d'éthylène et du composé de formule I.

6. Procédé de préparation d'un polymère d'éthylène contenant du silicium, caractérisé en ce que l'éthylène et au moins un monomère copolymérisable avec l'éthylène et englobant un comonomère polyinsaturé, qui est un α,ω-divinylsiloxane de formule I 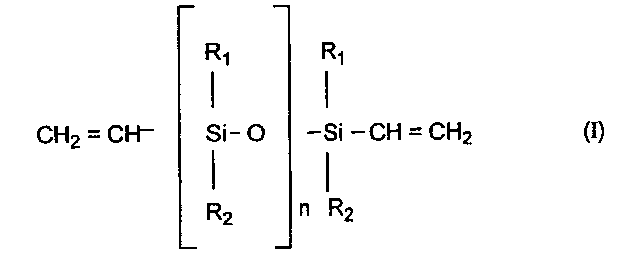 dans laquelle R₁ et R2, qui peuvent être identiques ou différents, sont choisis parmi des groupes alkyle ayant 1 à 4 atomes de carbone et des groupes alcoxy ayant 1 à 4 atomes de carbone, et n = 1 à 200, sont copolymérisés à une pression d'environ 100 à 300 MPa et une température d'environ 80 à 300 °C sous l'influence d'un initiateur de radicaux.

7. Procédé tel que revendiqué dans la revendication 6, caractérisé en ce que R₁ et R₂ dans la formule I sont CH₃ et n = 1 à 50.

8. Procédé tel que revendiqué dans la revendication 6 ou 7, caractérisé en ce que l'éthylène est copolymérisé avec un comonomère de formule I et un monomère insaturé vinyliquement supplémentaire.

9. Procédé de préparation d'un polymère d'éthylène contenant du silicium, caractérisé en ce qu'on prépare un polymère d'éthylène par polymérisation d'éthylène, éventuellement avec au moins un monomère insaturé vinyliquement supplémentaire, et en ce que le polymère d'éthylène résultant est copolymérisé par greffage avec un α,ω-divinylsiloxane de formule I 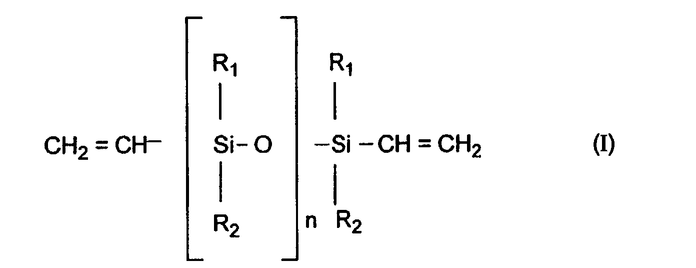 dans laquelle R₁ et R₂ qui peuvent être identiques ou différents, sont choisis parmi des groupes alkyle ayant 1 à 4 atomes de carbone et des groupes alcoxy ayant 1 à 4 atomes de carbone, et n = 1 à 200.

10. Utilisation du polymère d'éthylène selon l'une quelconque des revendications 1 à 5 dans des compositions pour la préparation de structures réticulées.

11. Utilisation du polymère d'éthylène selon l'une quelconque des revendications 1 à 5 dans des compositions pour un matériau de couche isolante, un matériau de couche semi-conductrice et un matériau de gainage pour des câbles électriques.
